# EUROPEAN PATENT APPLICATION

(11) **EP 1 860 716 A1**
(43) Date of publication of application: **28.11.2007**
(21) Application number: 07001894.0
(22) Date of filing: 29.01.2007
(51) Int. Cl.: H01M 8/04

(54) **Fuel cell system**

(30) Priority: 25.05.2006 KR 20060047257
(71) Applicant: LG Electronics Inc., Yongdungpo-gu Seoul (KR); LG Chem, Ltd., Yongdungpo-Gu Seoul (KR)
(72) Inventor: Hwang, Yong-Jun, Seoul (KR); Park, Jung-Gyu, Seocho-Gu Seoul (KR); Park, Myung-Seok, Gwangmyeong Gyeonggi-Do (KR)
(74) Representative: TER MEER - STEINMEISTER & PARTNER GbR

(57) **Abstract**

A fuel cell system includes: a stack unit for generating electricity according to an electrochemical reaction between air and hydrogen; a fuel supply unit for supplying hydrogen to the stack unit; an air supply unit for supplying air to the stack unit; and a load corresponding unit for measuring a current value of electricity generated by the stack unit and controlling an amount of hydrogen and air simultaneously or separately. Load corresponding capability of the fuel cell system is improved, and thus, the overall performance of the system can be enhanced.

## Description

### BACKGROUND OF THE INVENTION

### 1. Field of the Invention

The present invention relates to a fuel cell system and, more particularly, to a fuel cell system capable of properly controlling an amount of hydrogen and air supplied to a stack unit according to a size of a load.

### 2. Description of the Related Art

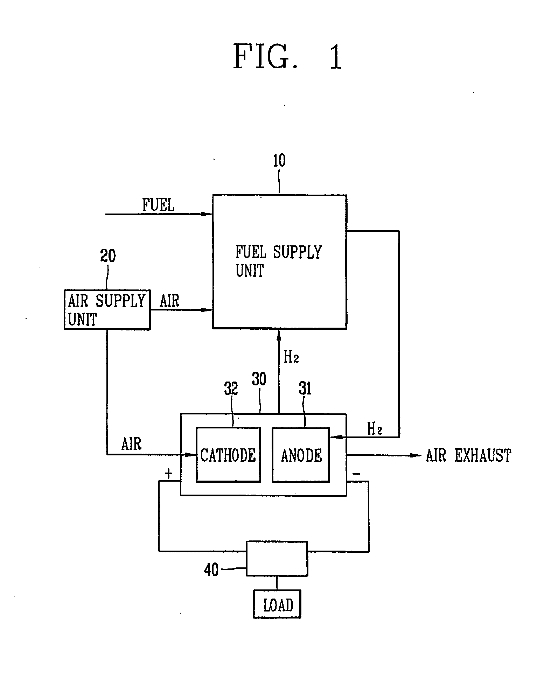

FIG. 1 shows the related art fuel cell system of a PEMFC (Proton Exchange Membrane Fuel Cell) type (generally called 'fuel cell system') in which hydrocarbon-based (CH-based) fuel such as LNG, LPG, CH₃OH, gasoline, etc. sequentially undergoes a desulfurization process, a modification reaction and a hydrogen purification process to purify only hydrogen (H₂) so as to be used as a fuel.

As shown in FIG. 1, the related art fuel cell system includes a fuel supply unit for extracting only hydrogen (H₂) from LNG and supplying it to a stack unit 30, an air supply unit 20 for supplying air to the stack unit 30 and the fuel supply unit 10, the stack unit 30 having an anode 31 and a cathode 32 for generating electricity according to an electrochemical reaction between supplied hydrogen and air, and an electricity output unit 40 for converting electricity generated in the stack unit 30 into an AC and supplying it to a load such as a home appliance.

However, in the related art fuel cell system, the amount of hydrogen supplied from the fuel supply unit 10 to the anode 31 of the stack unit 30 and the amount of air supplied from the air supply unit 20 to the cathode 32 of the stack unit 30 are uniform always regardless of the size of the load.

Namely, although the smaller amount of electricity is required for a smaller load, hydrogen and air of more than the need are continuously supplied to the stack unit, and conversely, although the larger amount of electricity is required for the larger load, the sufficient amount of hydrogen and air are not supplied timely. In addition, because the fuel cell system fails to properly cope with the load, hydrogen is unnecessarily wasted, resulting in degradation of the overall performance of the fuel cell system.

### BRIEF DESCRIPTION OF THE INVENTION

Therefore, an object of the present invention is to provide a fuel cell system capable of appropriately controlling an amount of air or hydrogen supplied to a stack unit according to a size of a load.

To achieve these and other advantages and in accordance with the purpose of the present invention, as embodied and broadly described herein, there is provided a fuel cell system including: a stack unit for generating electricity according to an electrochemical reaction between air and hydrogen; a fuel supply unit for supplying hydrogen to the stack unit; an air supply unit for supplying air to the stack unit; and a load corresponding unit for measuring a current value of electricity generated by the stack unit and controlling an amount of hydrogen and air simultaneously or separately.

The load corresponding unit may include a fuel circulation blower installed on a re-circulation line to re-circulate hydrogen discharged from the stack unit to the stack unit again; and a fuel controller for controlling a driving voltage of the fuel circulation blower according to the current value.

The load corresponding unit may include an air circulation blower installed on an air supply line for supplying air from the air supply unit to the stack unit; and an air controller for controlling a driving voltage of the air circulation blower according to the current value.

The load corresponding unit may include a fuel circulation blower installed on the re-circulation line for re-circulating hydrogen discharged from the stack unit to the stack unit again; an air circulation blower installed on an air supply line for supplying air from the air supply unit to the stack unit; and an integrated controller for controlling driving voltages of the fuel circulation blower and the air circulation blower according to the current value.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic block diagram showing a fuel cell system according to the related art;
FIG. 2 shows a distribution diagram of a fuel cell system according to an exemplary embodiment of the present invention;
FIG. 3 is a view showing an operational relationship between a load corresponding unit and a stack unit in FIG. 2;
FIG. 4 is a view showing an operational relationship between the load corresponding unit and the stack unit according to a first modification; and
FIG. 5 is a view showing an operational relationship between the load corresponding unit and the stack unit according to a second modification.

### DETAILED DESCRIPTION OF THE INVENTION

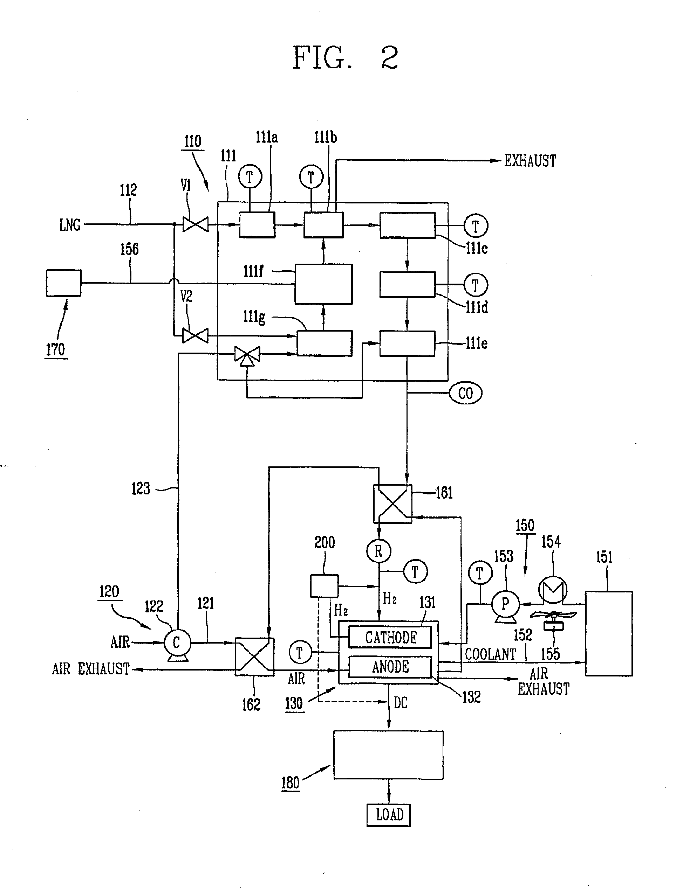

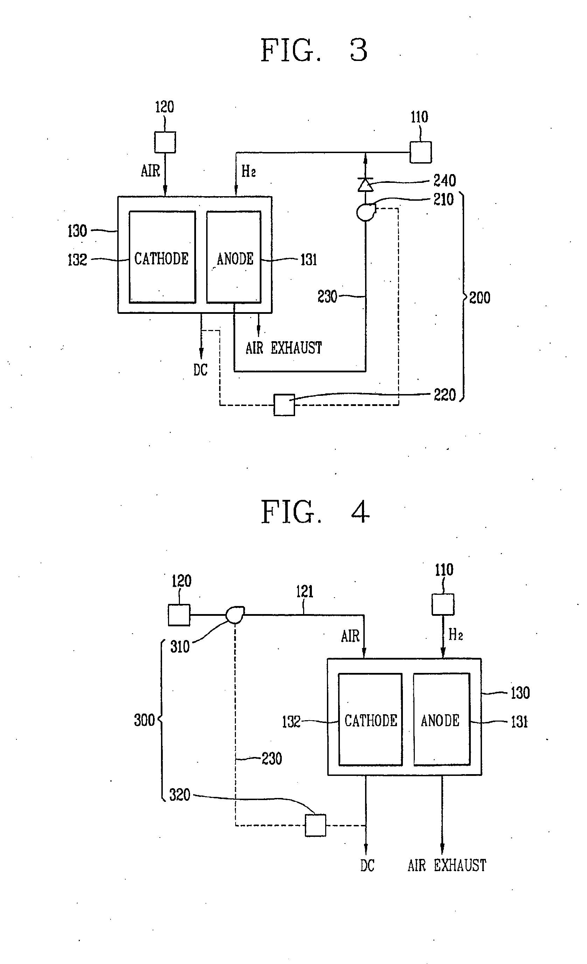

The fuel cell system according an exemplary embodiment of the present invention will now be described with reference to the accompanying drawings. FIG. 2 shows a distribution diagram of a fuel cell system according to an exemplary embodiment of the present invention, and FIG. 3 is a view showing an operational relationship between a load corresponding unit and a stack unit in FIG. 2.

With reference to FIG. 2, the fuel cell system according to the exemplary embodiment of the present invention includes: a fuel supply unit 110 for supplying hydrogen; an air supply unit 120 for supplying air; a stack unit 130 for generating electricity according to a reaction between the supplied hydrogen and air; a cooling unit 150 for cooling the stack unit 130 and retrieving heat generated from the stack unit 130; a hot water supply unit 170 for supplying hot water to a steam generator 111f through a pipe 156; an electricity output unit 180 for converting electric energy generated from the stack unit 130 into an AC and supplying it to a load; and a load corresponding unit 200 for measuring a DC current value generated from the stack unit 130 and controlling an amount of hydrogen or air.

The fuel supply unit 110 includes a reforming unit 111 for purifying hydrogen (H₂) from an LNG and supplying it to an anode 131 of the stack unit 130, and a pipe 112 for supplying the LNG to the reforming unit 111. The reforming unit 111 includes a desulfurization reactor 111a for desulfurizing a fuel; a reforming reactor 111b for allowing a fuel and steam to be reformed to generate hydrogen; a high temperature water reactor 111c and a low temperature water reactor 111d for reacting carbon monoxide generated through the reforming reactor 111b to additionally generate hydrogen; a partial oxidation reactor 111e for removing carbon monoxide from the fuel by using air as catalyst to purify hydrogen; a steam generator 111f for supplying steam to the reforming reactor 111b; and a burner 111g for supplying required heat to the steam generator 111f.

The air supply unit 120 includes first and second supply lines 121 and 123, and an air supply fan 122. The first air supply line 121 is installed between the air supply fan 122 and a second pre-heater 162 in order to supply air of the atmosphere to the cathode 132. The second air supply line 123 is installed between the air supply fan 122 and the burner 111g in order to supply air of the atmosphere to the burner 111g.

The stack unit 130 includes the anode 131 and the cathode 132, and simultaneously generates electric energy and thermal energy according to an electrochemical reaction among hydrogen supplied from the fuel supply unit 110, re-circulated hydrogen discharged from the stack unit 130, and air supplied from the air supply unit 120.

The cooling unit 150 cools the stack unit 130 of the fuel supply unit 110 by supplying water to the stack unit 130. The cooling unit 150 includes a water supply container 151 for charging a certain amount of water, a water circulation line 152 for circulatively connecting the stack unit 130 and the water supply container 151, a water circulation pump 153 installed at a middle portion of the water circulation line 152 and pumping water in the water supply container 151, a heat exchanger 154 provided at a middle portion of the water circulation line 152 and cooling circulatively supplied water, and a heat releasing fan 155.

With reference to FIG. 3, the load corresponding unit 200 includes a fuel circulation blower 210 installed on a re-circulation line 230 for re-circulating hydrogen (referred to hereinafter as 're-circulation hydrogen') discharged from the anode 131 of the stack unit 130 again to the anode 131 of the stack unit 130; and a fuel controller 220 for measuring a DC current value of electricity generated from the stack unit 130 and controlling a driving voltage of the fuel circulation blower 210.

The fuel circulation blower 210 includes a turbo fan or a centrifugal fan and a driving motor for driving the turbo fan or the centrifugal fan, and the amount of re-circulation hydrogen supplied to the anode 131 of the stack unit 130 differs according to the number of rotations. Namely, when the number of rotations of the fuel circulation blower 210 increases, the amount of re-circulation hydrogen supplied to the anode 131 of the stack unit 130 increases, and when the number of rotations of the fuel circulation blower 210 decreases, the amount of re-circulation hydrogen supplied to the anode 131 of the stack unit 130 decreases.

The number of rotations is determined according to the size of a value of the DC current of electricity generated from the stack unit 130, and the DC current value differs depending on the size of a load. Namely, when the load increases, the DC current value increases, while when the load is small, the DC current value becomes small. Accordingly, the DC current value can be a variable for measuring the size of the load.

The fuel controller 220, which is formed as a microcomputer, etc., controls a size of the driving voltage of the fuel circulation blower 210 by measuring the DC current value varying according to the size of the load. Namely, when the DC current value is large, the driving voltage is increased in order to increase the number of rotations of the fuel circulation blower 210, to thus increase the amount of re-circulation hydrogen supplied to the anode 131 of the stack unit 130. Meanwhile, if the DC current value is small, the driving voltage is lowered to reduce the number of rotations of the fuel circulation blower 210 to thus reduce the amount of re-circulation hydrogen supplied to the anode 131 of the stack unit 130.

In this manner, by controlling the amount of re-circulation hydrogen according to the size of the load, the amount of hydrogen supplied to the anode 131 of the stack unit 130 can be precisely controlled to thus control the amount of electricity generated from the stack unit 130 according to the load of the fuel cell system. Thus, the load corresponding capability of the fuel cell system can be enhanced, and the reduction of consumption of hydrogen leads to improvement of the overall performance of the fuel cell system.

Reference numeral 240 denotes a backflow preventing valve (check valve) for preventing hydrogen supplied from the hydrogen supply unit 110 from flowing back to the anode 131 along the re-circulation line 230.

FIG. 4 is a view showing an operational relationship between the load corresponding unit and the stack unit according to a first modification. With reference to FIG. 4, the load corresponding unit 300 includes an air circulation blower 310 installed on the first air supply line 121 and supplying air from the air supply unit 120 to the anode 132 of the stack unit 130; and an air controller 320 for measuring a DC current value of electricity generated from the stack unit 130 and controlling a driving voltage of the air circulation blower 310.

According to the first modification of the present invention, the load corresponding unit includes the air circulation blower 310 in place of the fuel circulation blower 210 (refer to FIG. 3), so the amount of air supplied to the stack unit 130 can be precisely controlled according to the DC current value of electricity generated from the stack unit 130.

The air circulation blower 310 includes a turbo fan or a centrifugal fan and a driving motor for driving the turbo fan or the centrifugal fan, and the amount of air supplied to the anode 132 of the stack unit 130 differs according to the number of rotations.

Namely, when the number of rotations of the air circulation blower 310 increases, the amount of air supplied to the cathode 132 of the stack unit 130 increases, and when the number of rotations of the air circulation blower 310 decreases, the amount of air supplied to the cathode 132 of the stack unit 130 decreases.

The number of rotations is determined according to the size of a value of the DC current of electricity generated from the stack unit 130, and the DC current value differs depending on the size of a load. Namely, when the load increases, the DC current value increases, while when the load is small, the DC current value becomes small. Accordingly, the DC current value can be a variable for measuring the size of the load.

The air controller 320, which is formed as a microcomputer, etc., controls a size of the driving voltage of the air circulation blower 310 by measuring the DC current value varying according to the size of the load. Namely, when the DC current value is large, the number of rotations of the air circulation blower 310 is increased to thus increase the amount of air supplied to the cathode 132 of the stack unit 130. Meanwhile, if the DC current value is small, the number of rotations of the air circulation blower 310 is reduced to thus reduce the amount of air supplied to the cathode 132 of the stack unit 130.

In this manner, by precisely controlling the amount of air supplied to the cathode 132 of the stack unit 130 according to the size of the load, the amount of amount of electricity generated from the stack unit 130 can be controlled according to the load of the fuel cell system.

Thus, the load corresponding capability of the fuel cell system can be enhanced, and the reduction of consumption of hydrogen leads to improvement of the overall performance of the fuel cell system.

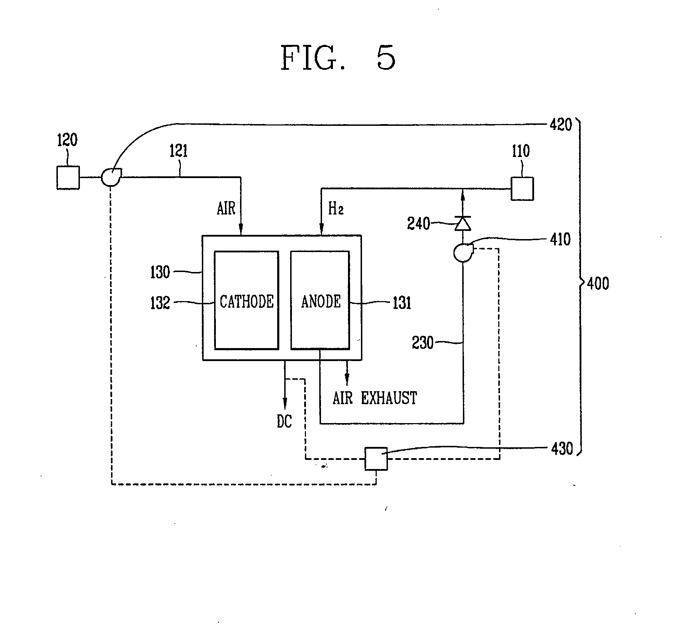

FIG. 5 is a view showing an operational relationship between the load corresponding unit and the stack unit according to a second modification. With reference to FIG. 5, the load corresponding unit 400 includes a fuel circulation blower 410 installed on the re-circulation line 230 for re-circulating hydrogen (referred to hereinafter as 're-circulation hydrogen') discharged from the anode 131 of the stack unit 130 again to the anode 131 of the stack unit 130; an air circulation blower 420 installed on the first air supply line 121 for supplying air to the cathode 132 of the stack unit 130 from the air supply unit 120; and an integrated controller 430 for measuring a value of the DC current of electricity generated from the stack unit 130 and controlling a driving voltage of the fuel circulation blower 410 and the air circulation blower 420.

According to the second modification of the present invention, the load corresponding unit includes both the fuel circulation blower 410 and the air circulation blower 420, so the amount of hydrogen and air supplied to the stack unit 130 can be precisely controlled according to the DC current value of electricity generated from the stack unit 130.

The fuel circulation blower 410 includes a turbo fan or a centrifugal fan and a driving motor for driving the turbo fan or the centrifugal fan, and the amount of re-circulation hydrogen supplied to the anode 131 of the stack unit 130 differs according to the number of rotations. Namely, when the number of rotations of the fuel circulation blower 410 increases, the amount of re-circulation hydrogen supplied to the anode 131 of the stack unit 130 increases, and when the number of rotations of the fuel circulation blower 210 decreases, the amount of re-circulation hydrogen supplied to the anode 131 of the stack unit 130 decreases.

The air circulation blower 420 includes a turbo fan or a centrifugal fan and a driving motor for driving the turbo fan or the centrifugal fan, and the amount of air supplied to the anode 132 of the stack unit 130 differs according to the number of rotations. Namely, when the number of rotations of the air circulation blower 420 increases, the amount of air supplied to the cathode 132 of the stack unit 130 increases, and when the number of rotations of the air circulation blower 420 decreases, the amount of air supplied to the cathode 132 of the stack unit 130 decreases.

The number of rotations of the fuel circulation blower 410 and the air circulation blower 420 is determined according to the size of a value of the DC current of electricity generated from the stack unit 130, and the DC current value differs depending on the size of a load. Namely, when the load increases, the DC current value increases, while when the load is small, the DC current value becomes small. Accordingly, the DC current value can be a variable for measuring the size of the load.

The integrated controller 430, which is formed as a microcomputer, etc., controls a size of the driving voltage of the fuel circulation blower 410 and the air circulation blower 420 by measuring the DC current value varying according to the size of the load. Namely, when the DC current value is large, the driving voltage is increased in order to increase the number of rotations of the fuel circulation blower 410 and the air circulation blower 420, to thus increase the amount of re-circulation hydrogen supplied to the anode 131 and air supplied to the cathode 132 of the stack unit 130.

Meanwhile, if the DC current value is small, the driving voltage is decreased to reduce the number of rotations of the fuel circulation blower 410 and the air circulation blower 410 to thus reduce the amount of re-circulation hydrogen supplied to the anode 131 and the amount of air supplied to the cathode 132 of the stack unit 130.

In this manner, by controlling the amount of re-circulation hydrogen and the amount of air according to the size of the load, the amount of hydrogen supplied to the anode 131 of the stack unit 130 and the amount of air supplied to the anode 132 can be precisely controlled to thus control the amount of electricity generated from the stack unit 130 according to the load of the fuel cell system. Thus, the load corresponding capability of the fuel cell system can be enhanced, and the reduction of consumption of hydrogen and air leads to improvement of the overall performance of the fuel cell system.

Reference numeral 240 denotes a backflow preventing valve (check valve) for preventing hydrogen supplied from the hydrogen supply unit 110 from flowing back to the anode 131 along the re-circulation line 230.

The operation and effect of the fuel cell system according to one embodiment of the present invention will be described with reference to FIGs. 2 and 3 as follows.

With reference to FIG. 2, the reforming unit 111 of the fuel supply unit 110 reforms LNG and steam to generate hydrogen and supplies hydrogen to the anode 131 of the stack unit 130.

Recirculation hydrogen discharged from the anode 131 of the stack unit 130 is supplied again to the anode 131 of the stack unit 130. The air supply unit 120 supplies air to the anode 132 of the stack unit 130. In this manner, the stack unit 130 generates electricity according to an electrochemical reaction among the thusly received hydrogen, the recirculation hydrogen and the air.

When the load increases according to an increase in the usage amount of electricity, the DC current value of electricity generated from the stack unit 130 increases. Then, the fuel controller 220 increases the driving voltage of the fuel circulation blower 210. As the driving voltage is increased, the number of rotations of the fuel circulation blower 210 increases, the amount of recirculation hydrogen supplied to the anode 131 of the stack unit 130 increases, and accordingly, the amount of generated electricity of the stack unit 130 increases according to the increased load.

If the load decreases as the usage amount of electricity decreases, the DC current value of electricity generated from the stack unit 130 is reduced. Then, the fuel controller 220 lowers the driving voltage of the fuel circulation blower 210. With the driving voltage lowered, the number of rotations of the fuel circulation blower 210 decreases to reduce the amount of recirculation hydrogen supplied to the anode 131 of the stack unit 130.

Accordingly, the amount of electricity generated from the stack unit 130 is reduced according to the reduced load.

As so far described, the fuel cell system according to the present invention has the following advantages.

That is, the load corresponding unit measures the current value of electricity generated from the stack unit and appropriately controls the amount of hydrogen and air supplied to the stack unit according to the size of the load. Thus, because the amount of hydrogen and air supplied to the stack unit is precisely controlled according to the size of the load, the amount of electricity generated from the stack unit can be controlled according to the size of the load of the fuel cell system. Accordingly, the load corresponding capability of the fuel cell system can be improved and because consumption of hydrogen and air is reduced, the overall performance of the fuel cell system can be enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell system comprising:
a stack unit for generating electricity according to an electrochemical reaction between air and hydrogen;
a fuel supply unit for supplying hydrogen to the stack unit;
an air supply unit for supplying air to the stack unit; and
a load corresponding unit for measuring a current value of electricity generated by the stack unit and controlling an amount of hydrogen and air simultaneously or separately.

2. The system of claim 1, wherein the load corresponding unit comprises:
a fuel circulation blower installed on a re-circulation line to re-circulate hydrogen discharged from the stack unit to the stack unit again; and
a fuel controller for controlling a driving voltage of the fuel circulation blower according to the current value.

3. The system of claim 1, wherein the load corresponding unit comprises:
an air circulation blower installed on an air supply line for supplying air from the air supply unit to the stack unit; and
an air controller for controlling a driving voltage of the air circulation blower according to the current value.

4. The system of claim 1, wherein the load corresponding unit comprises:
a fuel circulation blower installed on the re-circulation line for re-circulating hydrogen discharged from the stack unit again to the stack unit again;
an air circulation blower installed on an air supply line for supplying air from the air supply unit to the stack unit; and
an integrated controller for controlling driving voltages of the fuel circulation blower and the air circulation blower according to the current value.
